Europäisches Patentamt

**European Patent Office**

**Office européen des brevets**

(19)

(11) Veröffentlichungsnummer: **0 148 750**
**A2**

(12) # EUROPÄISCHE PATENTANMELDUNG

(21) Anmeldenummer: **85100101.6**

(22) Anmeldetag: **07.01.85**

(51) Int. Cl.⁴: **G 03 H 1/00**

(30) Priorität: **05.01.84 DE 3400267**

(43) Veröffentlichungstag der Anmeldung: **17.07.85**
**Patentblatt 85/29**

(84) Benannte Vertragsstaaten: **AT BE CH DE FR GB IT LI LU NL SE**

(71) Anmelder: **Dausmann, Gunther, Zur Sterzermühle 9, D-8058 Erding (DE)**

(72) Erfinder: **Dausmann, Gunther, Zur Sterzermühle 9, D-8058 Erding (DE)**

(74) Vertreter: **Lorenz, Eduard et al, Rechtsanwälte Eduard Lorenz - Bernhard Seidler Margrit Seidler - Dipl.-Ing. Hans-K. Gossel Dr. Ina Philipps - Dr. Paul B. Schäuble Dr. Siegfried Jackermeier, Widenmayerstrasse 23 D-8000 München 22 (DE)**

(54) **Verfahren und Vorrichtung zur holografischen Aufnahme von vorzugsweise dreidimensionalen Objekten.**

(57) Ein Verfahren zur Aufnahme von Hologrammen von Objekten ohne Referenzstrahl wird dadurch ermöglicht, dass zunächst ein aus einem Hologramm bestehendes optisches Bauteil hergestellt wird, das aus der Aufnahme zweier Objektstrahlen mit einem Referenzstrahl gebildet ist, wobei die Strahlen miteinander in kohärenter Beziehung stehen. Aus diesem optischen Bauteil werden sodann die Bilder der beiden Objektstrahlen mit einem Referenzstrahl rekonstruiert, der von dem aufzunehmenden Objekt ausgeht. Das von den rekonstruierten Bildern der ursprünglichen Objekte stammende Wellenfeld wird sodann als Hologramm auf einer fotoempfindlichen Trägerschicht aufgenommen. Aus diesem Hologramm lässt sich nun das Bild des aufgenommenen Objekts dadurch rekonstruieren, dass als Referenzstrahl einer der Objektstrahlen verwendet wird, der zur Aufnahme des optischen Bauteils verwendet wurde.

EP 0 148 750 A2

EDUARD LORENZ · BERNHARD SEIDLER · MARGRIT SEIDLER
DIPL.-ING. HANS K. GOSSEL · DR. INA PHILIPPS · DR. PAUL B. SCHÄUBLE
DR. SIEGFRIED JACKERMEIER

RECHTSANWÄLTE

0148750

Ihr Zeichen

Unser Zeichen      07.01.1985

Tag

~~82 657~~ G-die

*83 121*

Günther Dausmann,
8058 Erding

## Verfahren und Vorrichtung zur holografischen Aufnahme von vorzugsweise dreidimensionalen Objekten

Die Erfindung betrifft ein Verfahren zur Herstellung von Hologrammen von vorzugsweise dreidimensionalen Objekten mit einem holografisch hergestellten optischen Bauteil.

Aus der DE-OS 32 23 650 ist ein Verfahren zur Herstellung von Hologrammen von zweidimensionalen Objekten bekannt, bei dem zunächst ein Hologramm eines Objektpunktes mit einem Referenzstrahl hergestellt wird. Dieses Hologramm dient sodann der Herstellung eines Zwischenhologramms in der Weise, daß dieses das

8000 München 22                Telefax 0 89 / 22 06 78 (Gruppe 2/3)        Postgiro   München 170 280-604
Widenmayerstr.                 Telex 5 24 109 lorp d                       Bankkonto  Bayerische Vereinsbank
Telefon                                                                    München

0148750

- 2 -

Objekt des Zwischenhologramms ist. Das Wellenfeld des Interferenzmusters des ersten Hologramms bildet somit den Objektstrahl, der in üblicher Weise mit einem Referenzstrahl zur
Erstellung des Zwischenhologramms zur Interferenz gebracht wird.
Das Zwischenhologramm ist also ein Hologramm des ersten von dem
Objektpunkt aufgenommenen Hologrammes.

Dieses Zwischenhologramm wird sodann mit unterschiedlichen Referenzstrahlen rekonstruiert, so daß sich dem zuerst aufgenommenen
Hologramm entsprechende Hologramme ergeben, die auf Fotomaterial
aufgezeichnet und einander überlagert werden. Werden nun diese
einander überlagerten Hologramme mit dem Referenzstrahl, der zur
Erstellung des ersten Hologramms verwendet wurde, rekonstruiert,
so entstehen für jeden der Referenzstrahlen des aus dem optischen Bauteil bestehenden Zwischenhologramms Punkte des ursprünglichen Objekts mit der Charakteristik der unterschiedlichen Referenzstrahlen.

Das bekannte Verfahren gestattet somit die Herstellung von Hologrammen von Objekten, die auch mit monochromatischem, inkohärentem Licht bestrahlt werden können, ohne daß zusätzlich ein Referenzstrahl erforderlich wäre. Nachteilig ist jedoch, daß wegen
der Überlagerung der Hologramme sowohl das Objekt als auch das
fotografische Material zur Aufnahme des Hologramms in einer bestimmten Ebene angeordnet sein müssen und schon ein geringer
Versatz aus der richtigen Ebene zum Verschwinden des Hologramms
führt.

Weiterhin ist es nach dem bekannten Verfahren auch möglich, farbige Hologramme herzustellen, da entsprechend der chromatischen
Information unterschiedliche, einander überlagerte Hologramme

EDUARD LORENZ · BERNHARD SEIDLER · MARGRIT SEIDLER
DIPL.-ING. HANS K. GOSSEL · DR. INA PHILIPPS · DR. PAUL B. SCHÄUBLE
DR. SIEGFRIED JACKERMEIER
RECHTSANWÄLTE

0148750

Ihr Zeichen
Unser Zeichen
Tag

- 3 -

hergestellt werden, die bei der Rekonstruktion des Hologramms
den richtigen Farbeindruck des ursprünglichen Objektpunkts wiedergeben.

Das bekannte Verfahren ist nur mit erheblichem Aufwand durchführbar, weil bei der Herstellung des letzten Hologramms sowohl
das Objekt, das als Referenzstrahl zur Rekonstruktion von dem
ersten Hologramm entsprechenden, einander überlagerten Hologrammen dient, als auch das Fotomaterial, das der Aufzeichnung der
einander überlagerten rekonstruierten Hologramme dient, in einer
bestimmten Ebene liegen muß und schon ein Versatz von wenigen
Tausendstel Millimetern die Qualität der Rekonstruktion beeinträchtigt, wenn nicht sogar das rekonstruierte Hologramm zum
Verschwinden bringt.

Aufgabe der Erfindung ist es daher, ein Verfahren zu schaffen,
das die Aufnahme beliebiger Objekte ohne Referenzstrahlen vereinfacht.

Erfindungsgemäß wird diese Aufgabe durch die kennzeichnenden
Merkmale des Patentanspruchs 1 gelöst.

Nach dem erfindungsgemäßen Verfahren wird also zunächst ein aus
einem Hologramm bestehendes holografisch-optisches Element oder
Bauteil hergestellt, wobei das Hologramm die gleichzeitige Aufnahme zweier unterschiedlicher Objektpunkte mit einem Referenzstrahl enthält. Bei der Aufnahme ist dabei in bekannter Weise
dafür zu sorgen, daß die Interferenz der beiden Objektstrahlen
unterdrückt, also nicht aufgezeichnet wird, so daß nur eine
holografische Aufzeichnung aus der Interferenz beider Objektstrahlen mit dem Referenzstrahl entsteht.

8000 München 22
Widenmayerstraße 23
Telefon 0 89, 22 06 71

Telefax 0 89) 22 06 78 (Gruppe 2/3)
Telex. 5 24 109 Lawp 3
Telegramm

Postgiro München 1702 80-804
Bankkonto Bayerische Vereinsbank
München Konto

- 4 -

Die Interferenz der beiden Objektstrahlen muß zur Vermeidung von Geisterbildern unterdrückt werden. Durch geeignete Wahl der Intensitäten der Objektstrahlen und des Referenzstrahls kann eine merklich in Erscheinung tretende Interferenz der Objektstrahlen auf der Fotoschicht unterdrückt werden.

Dieses aus der Aufnahme zweier Objektstrahlen mit einem Referenzstrahl hergestellte holografisch-optische Element stellt nun ein Bauteil dar, von dem sich von beliebigen Objekten Hologramme ohne einen Referenzstrahl herstellen lassen. Die Herstellung derartiger Hologramme von einem Objekt ohne Referenzstrahl geschieht dadurch, daß aus dem optischen Bauteil mit einem Objektstrahl das Hologramm in der Weise rekonstruiert wird, daß virtuelle oder reelle Bilder der beiden Objektpunkte entstehen, wobei deren Wellen eine derartige Intensität haben, daß sie miteinander interferieren und auf einem Fotomaterial ein Hologramm erzeugen. Aus diesem Hologramm läßt sich nun das Bild des aufgenommenen Objekts dadurch rekonstruieren, daß als Referenzstrahl einer der Objektstrahlen verwendet wird, der zur Aufnahme des holografisch-optischen Elements verwendet wurde. Die Rekonstruktion des Hologramms des aufgenommenen Objekts geschieht also mit einem der ursprünglichen Objektstrahlen des optischen Bauteils.

Nach dem erfindungsgemäßen Verfahren läßt sich also ein optisches Bauteil oder Hilfsmittel herstellen, das die Herstellung von Hologrammen beliebiger Objekte ohne die nach den üblichen Verfahren erforderlichen Referenzstrahlen ermöglicht, weil dieser bereits in das optische Bauteil integriert ist. Die Aufnahme von Hologrammen läßt sich mit dem erfindungsgemäßen holografisch-optischen Bauteil wesentlich vereinfachen.

8000 München 22
Widenmayerstraße 23
Telefon (0 89) 22 06 74

Telefax (0 89) 22 06 78 (Gruppe 2/3)
Telex: 5 24 109 Lawp d
Telegramme Lawp München

Postgiro    München 1702 80-804
Bankkonto   Bayerische Vereinsbank
München

EDUARD LORENZ · BERNHARD SEIDLER · MARGRIT SEIDLER
DIPL.-ING. HANS K. GOSSEL · DR. INA PHILIPPS · DR. PAUL B. SCHÄUBLE
DR. SIEGFRIED JACKERMEIER
RECHTSANWÄLTE

0148750

Ihr Zeichen

Unser Zeichen

Tag

- 5 -

Vorzugsweise ist einer der beiden Objektpunkte, dessen Strahl
später zur Rekonstruktion benutzt wird, gegen das Unendliche
gerückt. Dadurch werden Verzerrungsfehler des rekonstruierten
Objekts weitgehend vermieden.

Der besondere Vorteil des erfindungsgemäßen Verfahrens liegt
darin, daß bei der Aufnahme des Hologramms, das aus der Rekonstruktion des optischen Bauteils mit dem Objektstrahl als Referenzstrahl entsteht, keine vorbestimmte Ebene für das optische
Aufnahmematerial einzuhalten ist. Dies folgt daraus, daß sich
das Wellenfeld der beiden aus der Rekonstruktion entstehenden
ursprünglichen Objektstrahlen ins Unendliche fortsetzt.

Im Gegensatz zu dem bekannten Verfahren läßt sich das das
optische Bauteil bildende Hologramm, das gleichsam ein die
Strahlen trennendes Hologramm bildet, mit einer Aufnahme erstellen.

Weiterhin ermöglicht das erfindungsgemäße Verfahren die farbige
Wiedergabe des aufgenommenen Objekts, und zwar im Gegensatz zu
dem bekannten Verfahren auch in dreidimensionaler Form.

Ein Ausführungsbeispiel der Erfindung wird nachstehend anhand
der Zeichnung näher erläutert. In dieser zeigt

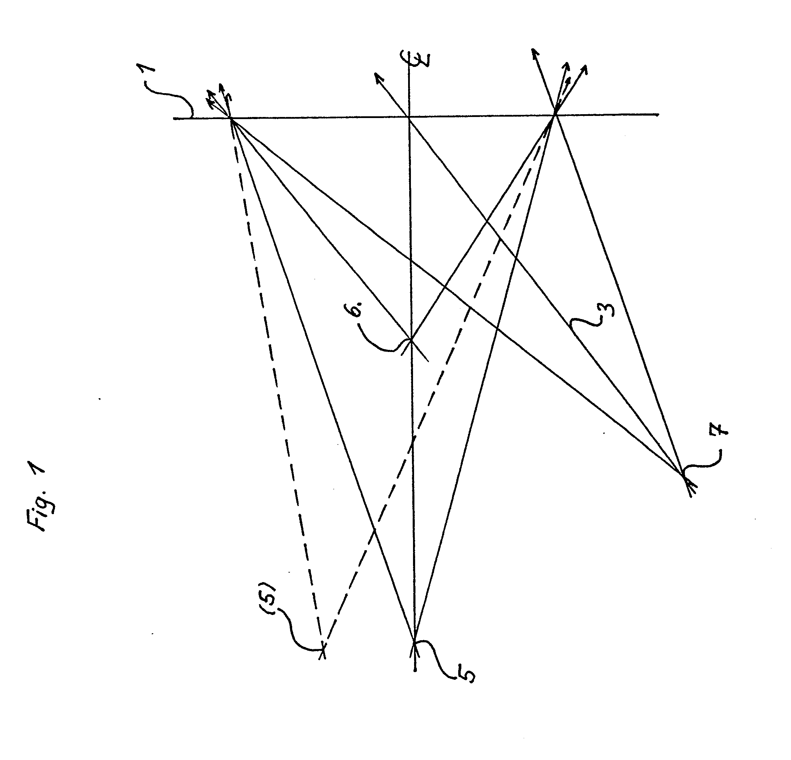

Fig. 1    eine schematische Darstellung der Aufnahme
des ersten Hologramms, das als holografisch-
optisches Bauteil dient, und

8000 München 22                    Telefax (0 89) 22 06 78 (Gruppe 2/3)        Postgiro:  München 1702 80-804
Widenmayerstraße 23                Telex. 5 24 109 Lawp d                       Bankkonto: Bayerische Vereinsbank
Telefon (0 99) 22 06 74            Telegrammanschrift Lawpat München            München Konto 89 2919

EDUARD LORENZ · BERNHARD SEIDLER · MARGRIT SEIDLER
DIPL.-ING. HANS K. GOSSEL · DR. INA PHILIPPS · DR. PAUL B. SCHÄUBLE
DR. SIEGFRIED JACKERMEIER
RECHTSANWÄLTE

0148750

Ihr Zeichen
Unser Zeichen
Tag

- 6 -

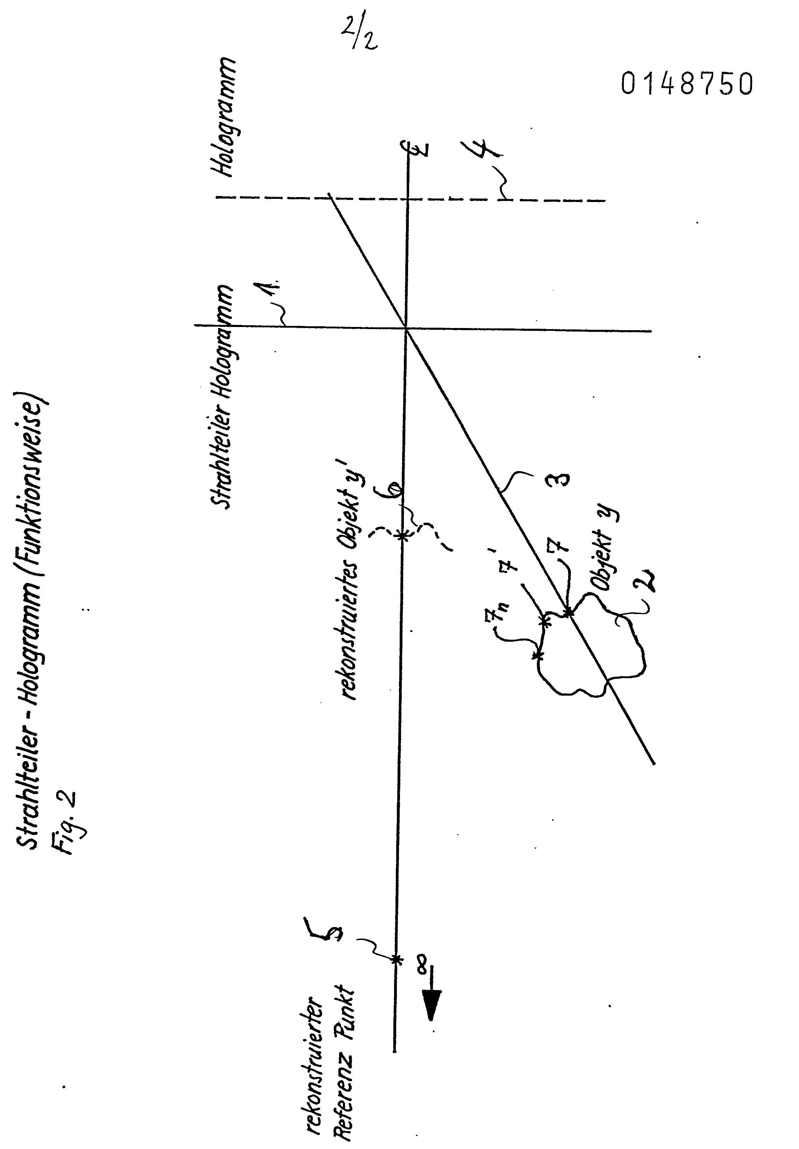

Fig. 2     eine schematische Darstellung der Aufnahme
eines Hologramms von einem Objekt mit dem
gemäß Fig. 1 hergestellten holografisch-
optischen Bauteil.


Das holografisch-optische Element (HOE) wird dadurch hergestellt, daß auf die fotografische Trägerschicht 1, die die Hologrammebene des HOE darstellt, die von den Objektpunkten 5 und
6 ausgehenden Objektwellen fallen, die zwar nicht miteinander,
aber jede für sich mit dem Referenzstrahl interferieren, der von
dem Lichtpunkt 7 kommt. Der Mittelstrahl des Referenzstrahls ist
mit 3 bezeichnet.

Die Objektpunkte 5, 6 können gleichachsig oder aber auch schief
angeordnet sein, wie es durch den Objektstrahl (5) angedeutet
ist.

Nachdem auf der fotografischen Trägerschicht 1 die Hologramme
der beiden Objektpunkte 5 und 6 mit dem Referenzstrahl aufgenommen worden sind, wird das Hologramm in üblicher Weise entwikkelt, womit das HOE fertiggestellt ist.

Bei der Aufnahme des HOE wird in bekannter Weise vermieden, daß
sich aus der Interferenz der Objektstrahlen 5, 6 ergebende Interferenzmuster mitaufgezeichnet werden.

Die Aufnahme von Hologrammen ohne Referenzstrahl mit dem nach
Fig. 1 hergestellten HOE wird nun anhand der Fig. 2 erläutert.

8000 München 22                    Telefax (0 89) 22 06 78 (Gruppe 2/3)        Postgiro:   München 1702 80-804
Widenmayerstraße 23                Telex: 5 24 109 Lawp d                      Bankkonto  Bayerische Vereinsbank
Telefon (0 89) 22 06 74            Telegrammanschrift Lawod München            München Konto 862 213

EDUARD LORENZ · BERNHARD SEIDLER · MARGRIT SEIDLER
DIPL.-ING. HANS K. GOSSEL · DR. INA PHILIPPS · DR. PAUL B. SCHÄUBLE
DR. SIEGFRIED JACKERMEIER
RECHTSANWÄLTE

0148750

Ihr Zeichen

Unser Zeichen

Tag

- 7 -

Das nach Fig. 1 hergestellte HOE wird in gewählter Weise zum
Objekt 2 fixiert. Das HOE wird sodann mit den von dem Objekt 2
kommenden Objektstrahlen angestrahlt, wobei sich diese Objektstrahlen in Bezug auf die in dem HOE gespeicherten Hologramme
als Referenzstrahlen auffassen lassen. Diese Referenzstrahlen
rekonstruieren aus dem HOE 1 die ursprünglichen Objektpunkte
5, 6, die nun aber die Charakteristiken des als Referenzstrahlen
verwendeten Objektstrahls 3 aufweisen. Es ergeben sich somit
zwei Rekonstruktionen, deren Strahlen nunmehr ebenfalls miteinander interferieren, so daß sich aus diesen ein Hologramm des
Objekts 2 in der Hologrammebene 4 aufzeichnen läßt. Diese Hologrammebene kann innerhalb des Interferenzfeldes der rekonstruierten Objektpunkte 5, 6 eine beliebige Lage einnehmen. Eine genaue
Justierung der Hologrammebene 4 zur Aufnahme des Hologramms des
Objekts 2 ist daher nicht erforderlich, so daß die Aufnahme von
Hologrammen von Objekten 2 mit dem erfindungsgemäß hergestellten
HOE einfach und unkompliziert ist.

Das Objekt 2 läßt sich bei der Aufnahme und Rekonstruktion als
durch die Punkte 7, 7' und 7" zusammengesetzt auffassen.

Zur Rekonstruktion des von dem Objekt 2 in der Hologrammebene
4 aufgenommenen Hologramms dient nun einer der Objektstrahlen
5, 6 als Referenzstrahl.

Die Herstellung des HOE kann beispielsweise auch dadurch erfolgen, daß der Objektstrahl durch einen teildurchlässigen Spiegel
gebildet wird, wobei der reflektierte Teil die Objektwelle des
einen Objekts ist und der durchgehende Strahl die Objektwelle

8000 München 22
Widenmayerstraße 23
Telefon (0 89) 22 06 74

Telefax (0 89) 22 06 78 (Gruppe 2/3)
Telex 5 24 109 Lawp d
Telegrammanschrift: Lawpat München

Postgiro: München 170280-804
Bankkonto: Bayerische Vereinsbank
München, Konto 362019

0148750

- 8 -

des anderen Objekts. Bei der Aufnahme sind die beiden Objektstrahlen und der Referenzstrahl durch in kohärenter Beziehung
stehendes Licht gebildet. Die Intensitäten der Lichtstrahlen
sind dabei derart gewählt, daß die Interferenz der Objektstrahlen miteinander gegenüber der Interferenz der Objektstrahlen mit
dem Referenzstrahl nicht in Erscheinung tritt.

Der erste Objektstrahl ist vorzugsweise durch eine Kugelwelle
gebildet, während der andere Objektstrahl gleichsam aus dem
Unendlichen mit ebenen Wellen kommt.

EDUARD LORENZ · BERNHARD SEIDLER · MARGRIT SEIDLER
DIPL.-ING. HANS K. GOSSEL · DR. INA PHILIPPS · DR. PAUL B. SCHÄUBLE
DR. SIEGFRIED JACKERMEIER
RECHTSANWÄLTE

0148750

Ihr Zeichen

Unser Zeichen  07.01.1985

Tag

~~82 657~~ G-die

83121


Günther Dausmann,
8058 Erding


**Verfahren und Vorrichtung zur holografischen Aufnahme
von vorzugsweise dreidimensionalen Objekten**


**Patentansprüche:**


1.  Verfahren zur Aufnahme von Hologrammen von Objekten,
    **gekennzeichnet** durch folgende Merkmale:

    (a)  Es wird ein aus einem Hologramm bestehendes optisches
         Bauteil hergestellt, das aus der Aufnahme zweier Objektstrahlen mit einem Referenzstrahl gebildet ist,
         wobei die Strahlen miteinander in kohärenter Beziehung
         stehen.

8000 München 22
Widenmayerstraße 23
Telefon (0 89) 22 06 74 -77

Telefax (0 89) 22 06 78 (Gruppe 2/3)
Telex · 5 24 109 Lawp d
Telegrammanschrift Lawoat München

Postgiro:  München 1702 80-804
Bankkonto  Bayerische Vereinsbank
München Konto 262 31 1

EDUARD LORENZ · BERNHARD SEIDLER · MARGRIT SEIDLER
DIPL.-ING. HANS K. GOSSEL · DR. INA PHILIPPS · DR. PAUL B. SCHÄUBLE
DR. SIEGFRIED JACKERMEIER
RECHTSANWÄLTE

0148750

(b)   Aus dem optischen Bauteil werden die Bilder der beiden
      Objektstrahlen mit einem Referenzstrahl rekonstruiert,
      der von dem aufzunehmenden Objekt ausgeht.

(c)   Das von den rekonstruierten Bildern der ursprünglichen
      Objekte stammende Wellenfeld wird als Hologramm auf
      einer fotoempfindlichen Trägerschicht aufgenommen.

2.  Verfahren nach Anspruch 1, dadurch gekennzeichnet, daß das
    das optische Bauteil bildende Hologramm durch gleichzeitiges
    Auftreffen der Objekt- und Referenzstrahlen gebildet wird.

3.  Verfahren nach Anspruch 1 oder 2, dadurch gekennzeichnet,
    daß einer der Objektstrahlen zur Erstellung des Hologramms
    für das optische Bauteil aus ebenen Wellen (aus dem Unendlichen kommend) besteht.

4.  Verfahren nach einem der vorhergehenden Ansprüche, dadurch
    gekennzeichnet, daß die Objektwellen zur Erstellung des
    optischen Bauteils einen spitzen Winkel miteinander einschließen.

5.  Verfahren nach Anspruch 1, dadurch gekennzeichnet, daß die
    Strahlen der beiden Objekte zur Erstellung des optischen
    Bauteils eine gemeinsame optische Achse besitzen.

8000 München 22                    Telefax (0 89) 22 06 78 (Gruppe 2/3)         Postgiro:    München 170280-804
Widenmayerstraße 23                Telex : 5 24 109 Lawp d                       Bankkonto:  Bayerische Vereinsbank
Telefon (0 89) 22 06 74-77         Telegrammanschrift: Lawpat München                       München Konto 362019

EDUARD LORENZ · BERNHARD SEIDLER · MARGRIT SEIDLER
DIPL.-ING. HANS K. GOSSEL · DR. INA PHILIPPS · DR. PAUL B. SCHÄUBLE
DR. SIEGFRIED JACKERMEIER
RECHTSANWÄLTE

0148750

Ihr Zeichen
Unser Zeichen
Tag

- 3 -

6. Verfahren nach einem der vorhergehenden Ansprüche, dadurch gekennzeichnet, daß zur Rekonstruktion des Hologramms ein Referenzstrahl benutzt wird, der dem Objektstrahl zur Erstellung des optischen Bauteils mit ebenen Wellen entspricht.

7. Verfahren nach einem der vorhergehenden Ansprüche, dadurch gekennzeichnet, daß der Objektstrahl zur Rekonstruktion der Objektstrahlen für das optische Bauteil zur Erstellung des Hologramms aus weißem Licht besteht.

8. Verfahren nach Anspruch 1, dadurch gekennzeichnet, daß das holografisch-optische Bauteil (HOE) aus einem von einem Computer generierten Hologramm besteht.

8000 München 22
Widenmayerstraße 23
Telefon (0 89) 22 06 74-77

Telefax (0 89) 22 06 78 (Gruppe 2/3)
Telex 5 24 109 Lawp d
Telegrammanschrift: Lawpat München

Postgiro: München 1702 80-804
Bankkonto: Bayerische Vereinsbank
München, Konto 862 019

Fig. 1

# Strahlteiler - Hologramm (Funktionsweise)
## Fig. 2

Strahlteiler Hologramm

Hologramm

rekonstruierter Referenz Punkt

rekonstruiertes Objekt y'

Objekt y